# EUROPEAN PATENT SPECIFICATION

(11) **EP 2 511 029 B1**
(45) Date of publication and mention of the grant of the patent: **03.07.2019**
(21) Application number: 10836136.1
(22) Date of filing: 22.10.2010
(51) Int. Cl.: B22F 3/02, B22F 1/00, B22F 3/24

(54) **PREPARATION METHOD OF METAL MATRIX COMPOSITE**
HERSTELLUNGSVERFAHREN FÜR METALLMATRIXVERBUNDSTOFF
PROCÉDÉ DE FABRICATION DU COMPOSITE À MATRICE MÉTALLIQUE

(30) Priority: 09.12.2009 KR 20090121630; 06.08.2010 KR 20100075762
(43) Date of publication of application: 17.10.2012
(73) Proprietor: Industry-Academic Cooperation Foundation, Yonsei University, Seoul 120-749 (KR)
(72) Inventor: BAE, Dong Hyun, Seoul 100-095 (KR); CHOI, Hyun Joo, Seoul 150-778 (KR)
(74) Representative: Patent- und Rechtsanwälte Ullrich & Naumann
(86) International application number: PCT/KR2010/007268
(87) International publication number: WO 2011/071240

(56) References cited:
- EP-A2- 0 147 769
- CN-A- 1 408 891
- JP-A- 10 168 502
- US-A- 5 632 827
- H. J. CHOI ET AL.: 'Reinforcement with Carbon Nanotubes in Aluminum Matrix Composites' SCRIPTA MATERIALIA vol. 59, April 2008, pages 360 - 363, XP022697422
- I. TOPCU ET AL.: 'Processing and Mechanical Properties ofB4C Reinforced Al Matrix Composites' JOURNAL OF ALLOYS AND COMPOUNDS vol. 482, April 2009, pages 516 - 521, XP026172807
- TOMOHARU TOKUNAGA: 'Microstructure and Mechanical Properties of Aluminum- Fullerene Composite Fabricated by High Pressure Torsion' SCRIPTA MATERIALIA vol. 58, no. 9, January 2008, pages 735 - 738, XP022512737

## Description

### [Technical Field]

The present invention relates to a method of manufacturing a metal matrix composite, and more particularly, to a method of manufacturing a metal matrix composite, which is configured such that the mechanical properties can be remarkably improved using a carbon nano material and a powder process.

### [Background Art]

Studies aimed to improve the mechanical properties, thermal properties, electrical properties, and the like of metal material by dispersing a heterogeneous carbon nano material, such as carbon nanotubes or fullerene (e.g. C₆₀), therein have been actively carried out for the last 10 years. In the early stages after the manufacture, most carbon nano materials are present in the form of being coagulated by van der Waals force due to their small size. It is therefore very difficult to disperse such nano materials in a material, such as a metal, which has a very compact crystal structure, by dividing respective particles of the nano material. Therefore, studies on composites using such carbon nano materials are not active.

Taking fullerene as an example, most overseas research achievements reported to date used a powder process (E. V. Barrera, J. Sims, and D. L. Callahan, J. Mater. Res. 1995;10;367) or a casting process (F.A. Khalid, O. Beffort, U.E. Klotz, B.A. Keller, P. Gasser, S. Vaucher, Acta Mater. 2003;51;4575). Recently, a research achievement using steel plastic deformation (T. Tokunaga, K. Kaneko, K. Sato, Z. Horita, Scripta Mater. 2008;58;735) was published. However, the metal/fullerene composite produced through the foregoing research result does not exhibit any merits as nano particles, since the size of the fullerene particles is on the order of tens of micrometers.

Although one fullerene molecule is a very fine particle having a size of about 1nm, fullerene particles are bonded together such that they form a face-centered cubic (fcc) structure, and are present in the form of powder having a size on the order of tens of micrometers in the early stage. In the above research, since fullerene particles having the shape of the early stage are dispersed in the metal matrix, fullerene is present as particles having a size of tens of micrometers instead of being dispersed as nano particles. In addition, when the powder process is used, fullerene particles having a size on the order of tens of micrometers are present on the surface instead of penetrating into the metal powder. Since such particles obstruct intermolecular bonding when integrated, it is difficult to manufacture a bulk material and commercial applicability is lacking. The use of the casting process makes the manufacturing process easier and simpler than the case of using the powder process, thereby achieving excellent commercial applicability. However, in casting, fullerene rises to the surface of molten metal and does not mix with metal, because the specific gravity of fullerene is lower than that of metal. Therefore, because of the foregoing difficulties in the manufacturing process, there are no precedents to date in which a metal-carbon nano material composite that has realized advantages and excellent characteristics of a nano-size carbon material, such as fullerene or carbon nano tubes, has been developed to the present.

US 5,632,827 A discloses an aluminum alloy and a process for producing the same. Specifically, the aluminum alloy is produced as an aluminum matrix composite by preparing a raw material comprising aluminum and carbon as components. An aluminum carbide (Al₄C₃)-like phase was found to develop at about 500°C, which converts into an equilibrium phase Al₄C₃ in the vicinity of a higher temperature of 600°C.

EP 0 147 769 A2 discloses an aluminum alloy and a process for producing the same, wherein the process for producing the aluminum alloy includes the steps of blending an aluminum alloy powder and a carbon or graphite powder and mechanically alloying the blend. During mechanical alloying and during a heat treatment, the initial carbon (graphite) converts to a carbide (Al₄C₃) which is finally dispersed in the master alloy.

### [Disclosure]

### [Technical Problem]

The present invention has been made to solve the foregoing problems with the related art and an object of the invention is to provide a method of manufacturing an aluminium matrix composite, in which fullerene in the form of powder having a size on the order of micrometers, is pulverized into a nano-size carbon material using a powder process, and is then dispersed into an aluminium matrix, thereby improving the properties of the material.

### [Technical Solution]

In order to realize the foregoing object, a method of manufacturing an aluminium matrix composite as defined in claim 1 is provided.

### [Advantageous Effects]

According to the method of manufacturing an aluminium matrix composite of the invention, a nano carbon material is uniformly added into an aluminium matrix powder, such that it performs strong interfacial bonding with the surrounding aluminium atoms. Therefore, due to hot machining performed on the powder, the nano carbon material can be integrated into a fine bulk material. Excellent mechanical properties, such as high strength and ductility, can also be realized, thereby greatly increasing industrial applicability. In addition, according to the invention, when the manufactured bulk composite is heat-treated at a temperature ranging from 0.5Tₘ to 1Tₘ (the melting point of the matrix material), the mechanical properties are not degraded, rather, the mechanical properties are increased due to a metal-carbon nano phase being precipitated in the shape of particles or grown as nano strips, or the particles or strips being bonded together by themselves. Furthermore, the manufacturing method of the invention is very simple and can be easily automated, thereby resulting in low process costs and excellent industrial applicability.

### [Description of Drawings]

FIG. 1 is pictures showing fullerene particles, in which (a) shows fullerene particles in the early stage, (b) shows fullerene particles which are pulverized;
FIG. 2 is a picture of C₆₀ fullerene, which is uniformly dispersed in an Al matrix;
FIG. 3 is a picture of the microstructure of an Al/C₆₀ composite after heat-treated for 12 hours, showing that the composite includes a new Al-C nano phase (indicated with dotted lines);
FIG. 4 is a state diagram of Al-C;
FIG. 5 is a picture of an Al-C nano phase, which is created after an Al/C₆₀ composite is heat-treated for 12 hours;
FIG. 6 is a picture of the microstructure of an Al/C₆₀ composite after heat-treated for 24 hours, showing that the Al-C nano phase contains a network-type Al-C nano strip structure due to self-assembly;
FIG. 7 is a picture of an Al/C₆₀ composite after heat-treated for 24 hours, taken by magnifying a network-type Al-C nano strip structure;
FIG. 8 is a graph showing the hardness of an Al matrix composite, which changes with time when the composite is heat-treated at 500°C;
FIG. 9 is a more detailed graph showing the hardness of an Al matrix composite, which changes with time when the composite is heat-treated at 500°C;
FIG. 10 is a result of X-ray diffraction analysis depending on heat treatment time when an Al matrix composite is heat-treated at 500°C, showing variation in the size of grains;
FIG. 11 is a picture of the microstructure of an Al matrix composite taken using a transmission electron microscope (TEM), after heat-treated at 520°C for 2 hours;
FIG. 12 is a result obtained by measuring variation in the lattice constant of an Al matrix composite through X-ray diffraction analysis, after heat-treated at 520°C for 2 hours, showing that the lattice constant is increased by about 5%;
FIG. 13 is a TEM picture showing Mg-C nano phases in which the lattice of Mg is deformed due to enforced dissolution of C atoms into the lattice when the Mg matrix composite is heat-treated at 425°C;
FIG. 14 is a view showing the result obtained by measuring the lattice constant of a sample, which was manufactured by heat-treating a Mg-C₆₀ composite at 425°C for 12 hours, and the lattice constant of a pure Mg sample through X-ray diffraction analysis, showing that the lattice constant was increased than that of the pure Mg sample;
FIG. 15 is a graph obtained by measuring variation in hardness depending on the heat treatment time when a Mg matixo composite was heat-treated at 425°C;
FIG. 16 is a TEM picture of the microstructure of a Mg-B₄C composite;
FIG. 17 is a TEM picture of the microstructure of a Mg-B₄C composite after heat-treated at 550°C for 3 hours, showing that the lattice of Mg is deformed due to penetration of B atoms into the lattice, thereby forming Mg-B nano phases; and
FIG. 18 is a view showing variation in the hardness of a Mg-B₄C composite due to heat treatment time when heat-treated at 550°C.

### [Best Mode]

Reference will now be made in detail to various examples of which are illustrated in the accompanying drawings and described below.

### 1. Pulverization of Carbon Material by Milling

The inventors researched a method of uniformly dispersing a carbon material in a metal matrix. For this, among a variety of solid carbon materials, fullerene, specifically, C₆₀ was selected as a carbon material, and aluminum (Al) was selected as a metal matrix. Then, composite powder was manufactured according to the following process. As described later, it is preferred that the metal matrix material generally be a material that is elastically and plastically deformable such that the carbon nano material, such as fullerene, can be efficiently added and dispersed. For example, it is especially preferred that the material be a pure metal, such as aluminum (Al), copper (Cu), iron (Fe), titanium (Ti) or the like, or a plastically-deformable alloy that has at least one of the pure metals as the matrix.

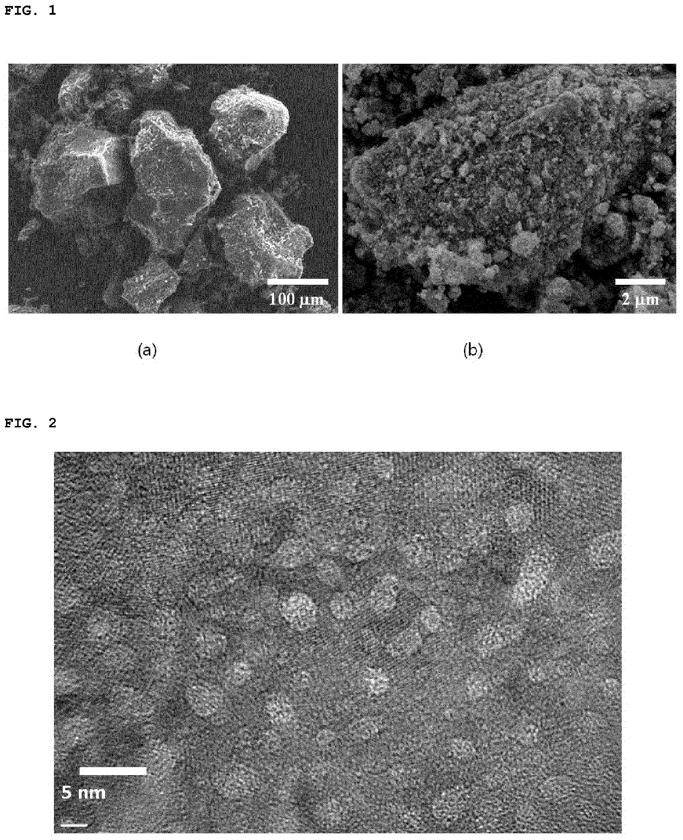

First, as shown in FIG. 1 (a), C₆₀, a type of fullerene, is arranged in the face-centered cubic (fcc) structure in the early stage and is thus present in the form of powder having several micrometers to tens of micrometers or greater. First, the inventors pulverized C₆₀ having the above-described micrometer size using a planetary mill. 2g C₆₀ powder and stainless balls having a diameter of 5mm (about 800g) were loaded into a stainless vessel, which was then rotated at a rate of 200 rpm, thereby applying physical energy, i.e. dynamic energy, to the C₆₀ powder. In order to prevent excessive heat from being created, the process of air cooling for 30 minutes after milling for 15 minutes was repeated a total of 8 times, thereby performing milling for 2 hours. A picture taken from the pulverized C₆₀ particles after the milling using a scanning electron microscope (SEM) is shown in FIG. 1 (b). Due to the milling, the C₆₀ particles were pulverized to a size ranging from 100nm to 1µm. The pulverized particles were weakly coagulated by van der Waals force.

In addition, the above-described mechanical milling is not limited to the planetary mill, but can be performed using a variety of milling methods, such as a spex mill and an attrition mill, which can apply energy to a milling medium such as balls.

### 2. Preparation of New Al-C₆₀ Composite Powder

An attrition mill was used in order to disperse C₆₀ particles (2 vol. %) in Al powder (average grain size of 150µm) . That is, after 100g composite powder of Al and pulverized C₆₀ and stainless balls having a diameter of 5mm (about 1.5kg) were loaded into a stainless vessel, and then blades were rotated at a rate of 500 rpm, thereby applying energy, with which the materials inside the vessel can collide against each other. While the materials are colliding inside the vessel, cooling water is flown on the outer portion of the vessel, thereby preventing temperature from rising. The atmosphere inside the vessel was maintained using argon (Ar) gas, thereby preventing the Al powder from being oxidized. After the process, the composite powder was collected by separating the powder from the balls using a sieve. The collected powder was photographed using a high-resolution transmission electron microscope (HREM), and the picture is shown in FIG. 2.

As shown in FIG. 2, it can be appreciated that the C₆₀ particles are individually separated and are uniformly dispersed. Here, C₆₀ is considerably deformed due to the milling, and thus it may be considered that there is possibility that C-C bonding be broken by subsequent heat treatment.

In addition, during the milling, the C₆₀ particles penetrate into the Al powder, which is relatively soft. While the Al powder is repeatedly subjected to plastic deformation, crushing, and cold welding, the C₆₀ particles may be pulverized into a smaller size, i.e. a nano size, and be uniformly dispersed in the Al powder. It appears that most C₆₀ particles penetrated into Al powder, and it is determined that C₆₀ will not interfere with intermetallic bonding in a hot molding process. The C₆₀ particles may be pulverized into particles having a size of 1µm or smaller via the first milling. In the second milling, as the metal powder is plastically deformed, and the C₆₀ particles having a nanometer size are uniformly dispersed into the metal powder. As such, the C₆₀ particles are uniformly dispersed inside the metal powder due to the first and second milling, and prevent metal atoms from diffusing, thereby stabilizing the microstructure. In addition, due to the absence of C₆₀ on the surface of the powder, metal atoms actively diffuse on the surface of the powder, so that bonding between the powder particles is not hindered in the subsequent hot machining, thereby making it possible to produce a high-quality bulk material. That is, the metal-C₆₀ composite powder produces a metal matrix composite powder in which the C₆₀ nano particles are uniformly dispersed in the metal matrix and forms strong interfacial bonding. Using this composite powder, a high-quality bulk material can be manufactured depending on the subsequent process.

As described above, it is possible to pulverize the C₆₀ particles to a size of 1µm or less or to a smaller nano size by applying impact energy to the composite powder inside the vessel via a medium, such as balls, in a single milling process, such as ball milling or hand milling, under a predetermined condition, which is empirically determined, so that the C₆₀ nano particles are inserted into and dispersed in the metal powder. Due to this process prior to the formation of the final bulk material, C₆₀ and the metal powder exhibit strong interfacial bonding characteristics due to mechanical interlocking between carbon and metal atoms. Since C₆₀ is uniformly dispersed inside the powder, the bonding between the powder particles is not reduced when forming the final bulk material. The above-described step can be carried out through a simplified single process comparing to methods of the related art in which carbon nano tubes are dispersed in the metal matrix through several steps, such as dispersion using a dispersion solution and calcinations.

In the mechanical energy used in the ball milling or hand milling may vary depending on the type and microscopic structure of the metal matrix, and can be controlled depending on the type, size and weight of the milling medium, the speed of the milling, the size of the milling vessel, and the like. In addition to the ball milling, it is possible to disperse the C₆₀ in the metal powder by applying a variety of methods, such as simple mixing, ultrasonic processing and hand milling.

### 3. Manufacturing of Metal Matrix Composite Having new Metal Matrix-C Nano Phase

### (1) Manufacture of Compact

The inventors noticed that it is possible to uniformly disperse C₆₀ in the metal matrix through the above-described process, and studied a method with which a final composite can be manufactured in a more simplified process using the above-described composite powder, which is prepared through that process.

That is, in order to prevent the problem in which powder is damaged when metal matrix composite powder in which C₆₀ is dispersed is directly machined at a high temperature and high pressure when manufacturing a metal matrix composite, the inventors anticipated that it is possible to prevent the properties of the metal matrix composition powder from degrading during hot processing by preparing an intermediate material (a compact) by first applying only pressure, or by applying pressure in a temperature range in which powder is not damaged, i.e. in which oxidation does not occur, to powder, and then producing a final bulk material by hot-machining the intermediated material.

Specifically, the inventors used room-temperature compression as a method of manufacturing an intermediate material by applying pressure to Al-C₆₀ (2 vol.%) composite powder, which is manufactured in the above-described milling. The intermediate material was manufactured by loading the composite powder into a copper tube, followed by the application of a pressure of 500 Mpa. In this case, the compressed powder showed porosity of 20% or less, and in the subsequent hot machining, it was possible to prevent the powder from being oxidized or C₆₀ from being damaged.

In the meantime, the inventors performed hot rolling at 480°C in order to perform hot machining on the intermediate material, which was manufactured following the above-described process. Rolling was performed 27 times at a reduction ratio of 12%, and the final thickness of the plate was reduced to 97% of the initial thickness of the intermediate material. In addition to the hot rolling, this hot molding may use a variety of hot molding processes, such as hot extrusion and hot pressing, in which the powder can be integrated due to heat and pressure applied thereto.

### (2) Manufacture of Metal Matrix Composite Having New Metal Matrix-C Nano Phase Due to Heat Treatment

The inventors performed heat treatment on the Al/C₆₀ composite, which was manufactured according to the above-described process, at 500°C (0.8Tm, Tm: melting temperature of Al). As can be more clearly understood from the following description, the heat treatment is performed in a temperature range in which individual C atoms can sufficiently diffuse to a short distance but do not form a carbon compound (carbide). This temperature range is preferably from 0.5Tₘ to 1Tₘ (Tₘ: melting temperature of metal matrix). When the temperature is lower than 0.5Tₘ, a sufficient amount of driving force for the C atoms to diffuse to a short distance may not be provided. When the temperature is higher than 1Tₘ, a carbon compound may be formed. Therefore, it is preferred that the heat treatment be performed in that temperature range. Thus, it should be understood that the temperature of 500°C at which the Al/C₆₀ composite was heat-treated is merely an example of heat treatment temperature. In the meantime, the heat treatment was performed by loading the Al/C₆₀ composite into the furnace, which is maintained at 500°C in the air, and maintaining this state for a predetermined time, followed by air cooling.

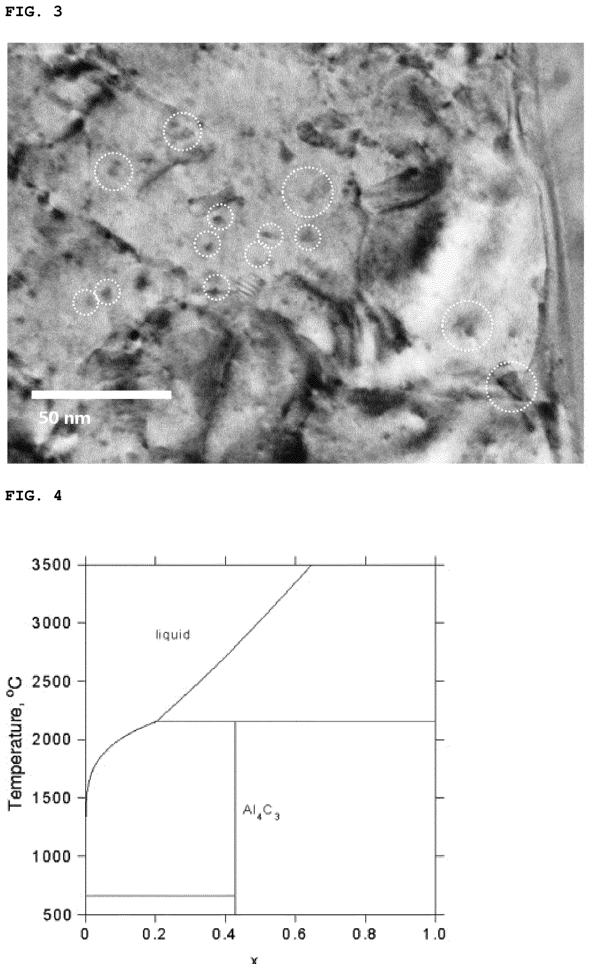

The microstructure due to that heat treatment was shown in FIG. 3. FIG. 3 shows the microstructure taken from the Al/C₆₀ composite, which was heat-treated at 500°C according to the above-described process, using the HREM. The inventors observed that an unexpected microstructure was obtained due to this heat treatment.

Specifically, as apparent from the picture of the microstructure of FIG. 3, in the Al/C₆₀ composite C₆₀ did not maintain the original structure, i.e. the C-C bonding was broken and individual C atoms performed short-distance diffusion. However, because the heat treatment temperature was not sufficiently high and the size of C₆₀ was very small, the C atoms did not diffuse as sufficiently as forming a carbon compound Al₄C₃, but the C atoms penetrated into the lattice of Al, thereby forming an Al-C nano phase. New phases, which were produced due to that heat treatment, are marked with circles in FIG. 3. As shown in the figure, it can be appreciated that the Al-C nano phases are uniformly formed in the grain. It also appears that dislocations are fixed around the Al-C nano phases, improving the properties of the material, such as high strength, as will be described below.

Specifically, FIG. 4 shows the state diagram of Al-C. As apparent from the state diagram, when a small amount of C is added to Al, no phases are formed. When C is included in a predetermined range, a carbon compound such as Al₄C₃ is formed. It is known, however, that the Al₄C₃ carbon compound gradually grows at high temperature, thereby greatly degrading the mechanical properties of an Al-C alloy.

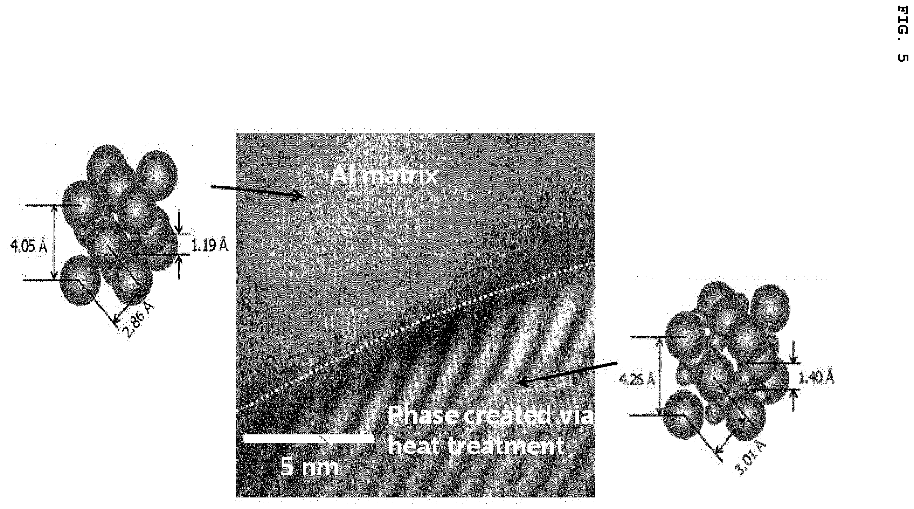

In contrast, the Al-C nano phase contained in the composite can be expressed by a composition, i.e. Al₄Cₓ (0<x<3), which is different from stoichiometric coefficients of the related art. This phase is a new nano phase that has not been reported in Al-C alloys of the related art. Referring to FIG. 5 taken by magnifying an Al-C nano phase, which is created subsequent to 12 hours heat treatment on an Al/C₆₀ composite, it can be appreciated that the lattice constant of the newly-created Al-C nano phase is about 3Å, which is a great increase from the lattice constant of the Al matrix of about 2.8 Å. This appears because, as shown in FIG. 5, although individual C atoms separated from C₆₀ attempted to diffuse into Al in order to form Al₄C₃ (carbon compound, aluminum carbide), C was not collected in an amount sufficient to form a carbon compound but occupied the interstitial sites of Al, thereby forming a new phase while causing the Al lattice to deform or expand. As such, the creation of a new phase, i.e. Al₄Cₓ (0<x<3) due to the penetration of C into the interstitial sites of Al leads to a new nano phase that has not been observed in the Al-C state diagram of the related art shown in FIG. 4. This nano phase acts as a factor that significantly increases the properties of the metal matrix composite as will be described later.

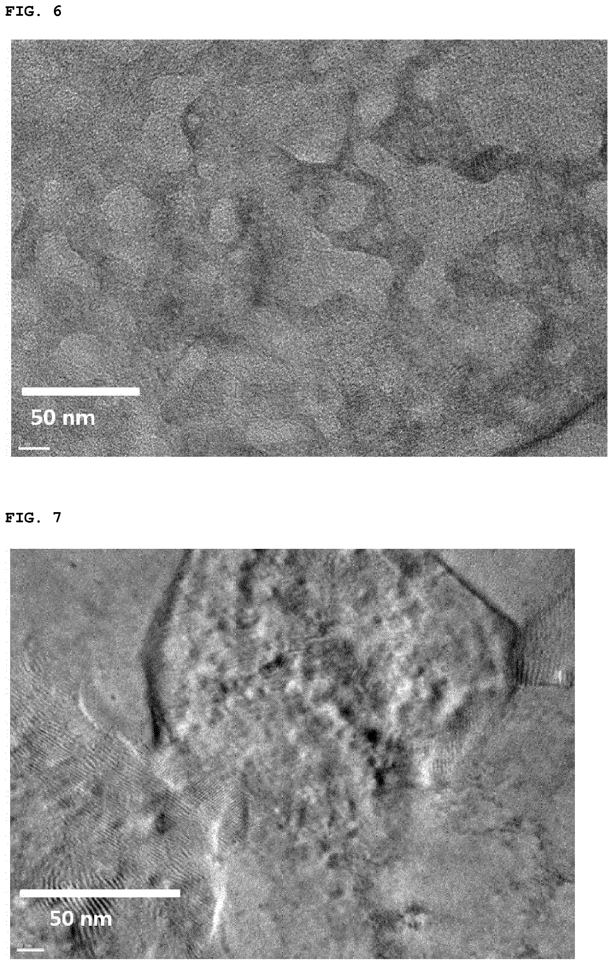

After the Al/C₆₀ composite manufactured by the above-described process was heat-treated at 500°C for 24 hours, the inventors examined the microstructure. In FIG. 6, a picture of the microstructure of the Al/C₆₀ taken after heat-treated for 24 hours is shown. Comparing with the case of FIG. 5, which involved heat treatment for 12 hours, the Al-C nano phase shown in FIG. 5 anisotropically grew in the form of nano strips or these nano strips are self-assembled in order to minimize lattice deformation energy, thereby forming Al-C nano network structure having a thickness of about 5 to 10nm around the grains. Due to this, the composite exhibited a very stable structure at high temperature. The picture taken by magnifying this nano network structure is shown in FIG. 7. It can be appreciated that this structure has the same lattice constant as the nano phase that occurred after heat-treated for 12 hours, and has the same structure in which C occupies some sites in the Al lattice. In the meantime, the Al grains acting as the matrix is micronized due to the nano strips. The Al matrix composite having this nano strip structure has further improvement in mechanical strength comparing with the case of FIG. 5.@

In brief, in the metal matrix composite the carbon nano material, for example, fullerene C₆₀ is pulverized to a nano size and is then uniformly dispersed inside the metal powder, such that it does not hinder the bonding between powder particles when the composite powder composed of the metal matrix and the carbon nano material is integrated later. Furthermore, in the integrated composite, the properties of the material, such as mechanical strength, are greatly improved. Moreover, when the integrated composite is subjected to heat treatment at a temperature lower than the melting point of the metal matrix, the bonding of C atoms of the carbon nano material is broken, so that individual C atoms perform short-distance diffusion, thereby forming metal matrix-C nano phases, metal matrix-C nano strips due to anisotropic growth of the metal matrix-C nano phases, and a metal matrix-C nano network structure due to self-assembly of the nano strips depending on the heat treatment time. These textures are new phases or structures, which have not been reported to date, and which inhibit the growth of the metal matrix grains, thereby realizing a surprising result in which mechanical properties such as strength are improved even though heat treatment is performed for a long time. This improvement in the mechanical properties will be described in more detail as follows.

### 4. Evaluation of Mechanical Properties of Metal Matrix Composite Having New Metal Matrix-C Nano Structure

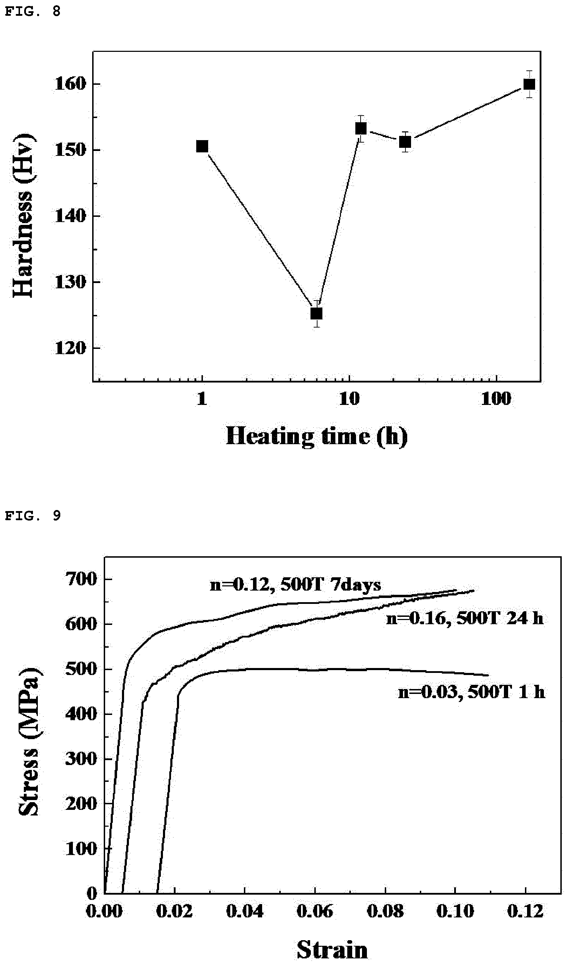

The inventors tested the mechanical properties of the Al matrix composite, which was manufactured as above, and the results are presented in FIG. 8 to FIG. 10.

FIG. 8 is a graph of the hardness of a composite which was manufactured according to the above-described process, the hardness being presented depending on the time for which the composite was maintained at a temperature of 500°C. It can be appreciated that the hardness dropped due to a recovery phenomenon, such as growth of grains and relaxation of residual stress, up to initial 6 hours. However, as the heat treatment was performed for 12 hours or longer, it can be observed that the hardness of the composite is improved with the increase in the heat treatment time. In order to more correctly measure the strength, the heat treatment was performed on the composite for 1 hour, 24 hours, and 7 days, respectively, and then compression test was performed at a strain of 10⁻⁴s⁻¹. The results are presented in FIG. 9.

The heat treatment for 1 hour refers to annealing intended to remove residual stress, which occurs in the rolling process for manufacturing the composite. Due to the annealing performed for 1 hour like this, the unique mechanical properties of the material can be evaluated.

As shown in FIG. 9, it can be appreciated that all of the Al matrix composites exhibited high strength of 500 MPa or greater. In particular, when only the annealing for 1 hour was performed, the mechanical strength of about 500 MPa was observed. It appears that fullerene in the metal matrix maintained the carbon bonding state during the annealing for 1 hour. Fullerene was uniformly inserted into the metal matrix, thereby improving the mechanical strength. This can be regarded as a very surprising result, since this strength was obtained due to the addition of annealing by only 2 vol%.

It can also be appreciated that the strength is much above 500 MPa due to the increase in the heat treatment time on the composite. Comparing to the maximum strength of all of existing Al alloys that is about 500 MPa, the mechanical strength of the composite can be significantly increased. In particular, the fact that the mechanical strength was significantly increased using only a small amount of fullerene of 2 vol%(1 wt%) is a surprising result. It can also be appreciated that the work hardening exponent n, i.e. a value representing an increase (inclination) in strength in response to variation in strain after metal starts to be plastically deformed, increases in response to an increase in heat treatment time. For reference, when the work hardening exponent is higher, even though the yield strength is the same, the material exhibits more excellent properties after plastic deformation and is evaluated as having fine ductility since the occurrence of necking is generally delayed.

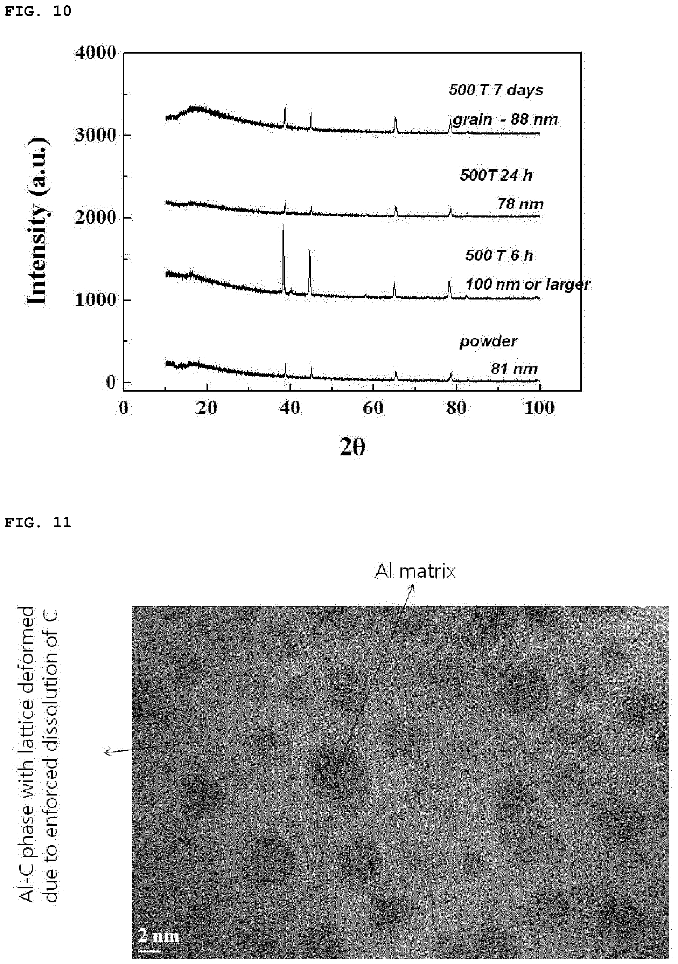

It can be appreciated that the results represented in FIG. 8 and FIG. 9 show different aspects from those of existing precipitation hardening. According to the existing precipitation hardening theory, grains are coarsened with increasing heat treatment time, thereby degrading mechanical strength. That is, there is a certain limit in the ability to increase strength using precipitation hardening. However, according FIG. 8 and FIG. 9, unlike the existing precipitation hardening theory, the mechanical strength increases with the increasing heat treatment time. This appears because, as the heat treatment time increases, metal-C nano phases form metal-C nano strips through anisotropic growth or the metal-C nano strips form a metal-C nano network structure through self-assembly as described above, such that the growth of the grains of the matrix metal is reduced, thereby continuously increasing the strength. This test result is a new phenomenon that did not occur in the existing materials. This will be described in more detail with reference to FIG. 10.

FIG. 10 is a view showing the result obtained by measuring variation in the size of grains depending on the heat treatment time through X-ray diffraction analysis. As shown in the figure, it can be appreciated that the grains grew to 100nm or greater when heat treatment was performed for 6 hours, whereas the size of grains decreased to the order of 80nm when heat treatment was performed for 24 hours and showed no significant change until the heat treatment continued 7 days. The phenomenon in which the strength gradually increases after the heat treatment was performed for a long time at a high temperature (773K) equal to or higher than 0.8Tₘ (the melting point of Al, 933K) is a unique feature that can be realized. This can be regarded as excellent property of the composite that can compensate for the drawback of Al, which is vulnerable to heat. As such, the composite obtained according to the invention exhibits excellent mechanical properties, such as high strength, due to the fullerene nano particles being uniformly dispersed, and the strength thereof is not lowered even after heat-treated at a high temperature. Rather, the strength is further increased by the Al-C nano phases, which were not observed in the related art, the Al-C nano strips formed due to anisotropic growth of the Al-C nano phases, or the Al-C nano network structure due to the self-assembly of the nano strips. Furthermore, very stable high-temperature properties can be exhibited.

The method of manufacturing a composite according to the invention is a simple method that can be applied to the general industry, and enables excellent productivity. In addition, as described above, the final machining material can exhibit excellent mechanical properties since the density thereof is high and the properties of the powder are maintained as they are.

### 5. Heat Treatment Temperature

As described above, according to the method of the invention, the fraction of the Al-C nano phases in which the lattice is deformed due to enforced dissolution of carbon increases as the heat treatment time increases. As for this, the effect of the heat treatment time on the rate of creation of nano phases was tested, and it was observed that the rate of creation of nano phases increased with the increasing heat treatment time. According to an embodiment, as for an Al-C₆₀ composite, the rate at which nano phases were created due to heat treatment at 520°C was compared with the rate at which nano phases were created due to heat treatment at 500°C. FIG. 11 is a picture of the microstructure of an Al-C₆₀ composite taken using a transmission electron microscope (TEM), after heat-treated at 520°C for 2 hours. It can be appreciated that the Al-C nano phases in which the lattice was deformed due to enforced dissolution of carbon were created by heat treatment at 520°C. It was also appreciated that the fraction of the nano phases reached 70% or greater when the heat treatment was performed by only two hours. This indicates that the nano phases can be created at a faster rate when the temperature of the heat treatment is increased.

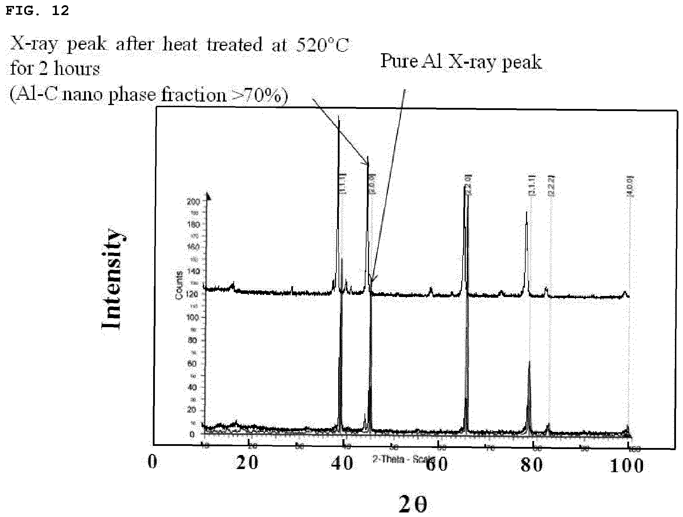

FIG. 12 is a view showing the result obtained by measuring variation in the lattice constant of a sample through X-ray diffraction analysis, after the heat treatment at 520°C for 2 hours. From the result of X-ray diffraction analysis shown in the figure, it can be appreciated that the peak is shifted to the left as much as can be observed with the eyes. When respective lattice constants are calculated, it can be appreciated that the lattice constant (about 0.422nm) of a sample (about 70% or greater of Al-C nano phases), which was heat-treated at 520°C for 2 hours, is increased about 5% than the lattice constant (about 0.405nm) of pure aluminum. When the lattice is changed due to an existing atom doping method, the lattice deformation is possible by only about 1%. However, in the composite the volume of a unit lattice can be increased by about 15% or greater. It is expected that the composite is available as materials for energy storage or the like. In addition, the method of manufacturing a composite according to the invention is expected to have high industrial applicability because it is very simple and the manufacturing cost thereof is low.

### 6. Carbon Material

Although fullerene, in particular, C₆₀, was used as a carbon material in the foregoing embodiment, it should be understood that the invention is not limited to C₆₀. For example, bucky ball structures of fullerene, such as C₁₇ or C₁₂₀, are also applicable to the invention. In addition, it is important to understand that other carbon materials than the fullerene, for example, carbon nanotube, graphite, carbon black, amorphous carbon, and the like, which can be mechanically pulverized to a nanometer size, are also applicable but not according to this invention.

### 7. Matrix Metal

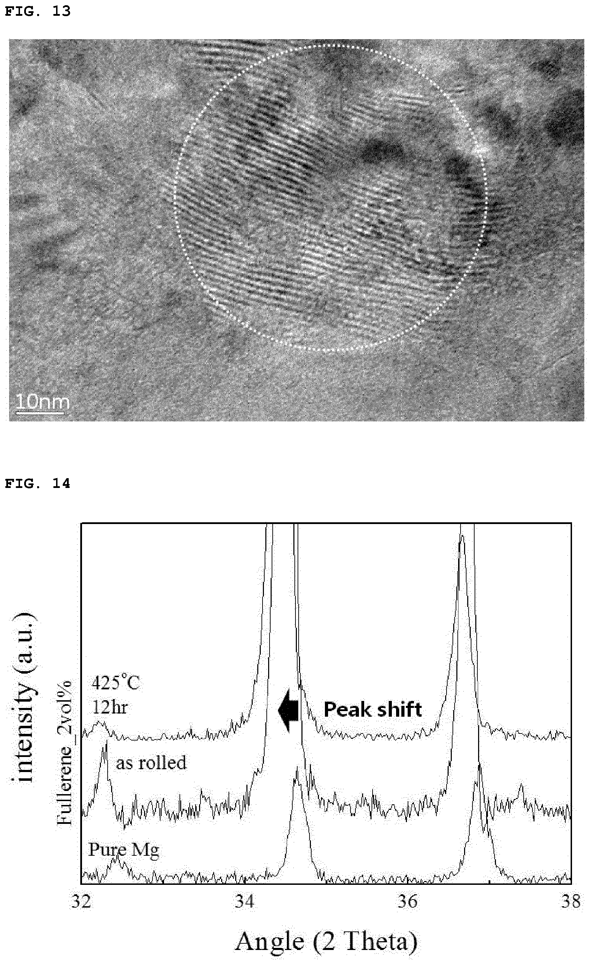

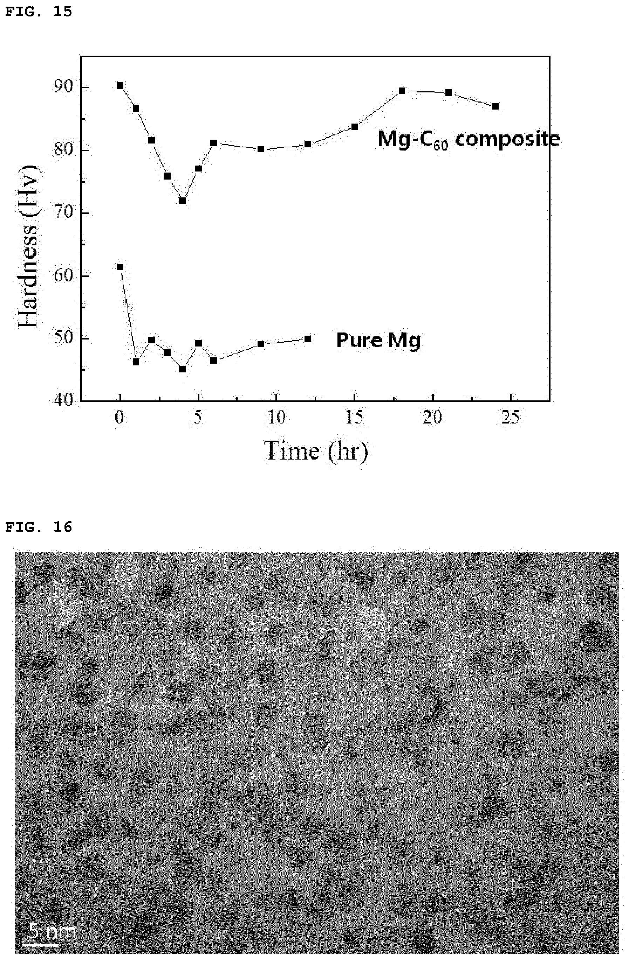

Although Al has been described as an example, it should be understood that a metal matrix composite that has a new metal-C nano phase, a new metal-C nano strip, or a new metal-C nano network structure can be manufactured by adapting the method of the invention to any materials, including pure metals, such as copper (Cu), iron (Fe), titanium (Ti), and magnesium (Mg), and plastically-deformable alloys that have at least one selected from among the pure metals, and the like, in addition to Al, as long as they allow efficient penetration and dispersion of a carbon material, such as fullerene. For example, the inventors carried out an experiment using Mg as a substitute for Al according to the same process as described above. A Mg-C₆₀ composite was heat-treated at 425°C. It was observed that lattice-deformed Mg-C nano phases were formed due to enforced dissolution of carbon atoms into the Mg lattice. The result is presented in FIG. 13. In addition, FIG. 14 is a view showing the result obtained by measuring the lattice constant of a sample, which was manufactured by heat-treating a Mg-C₆₀ composite at 425°C for 12 hours, and the lattice constant of a pure Mg sample through X-ray diffraction analysis. It can be appreciated that the X-ray diffraction peak is shifted to the left in the same manner as in the Al-C₆₀ composite. This indicates that the lattice constant of Mg is increased. FIG. 15 is a graph obtained by measuring variation in hardness depending on the heat treatment time when a Mg-C₆₀ composite sample and a pure Mg sample were heat-treated at 425°C. It can be appreciated that the Mg-C₆₀ composite exhibits more excellent hardness than the pure Mg sample. In the pure Mg sample, the hardness is decreased due to annealing in the early stage of the heat treatment and then remains in the decreased value. In contrast, in the Mg-C₆₀ composite sample, after the hardness is decreased due to annealing, the hardness is increased again due to Mg-C nano phases.

Therefore, a metal matrix composite that has a new metal-C nano phase, a new metal-C nano strip, or a new metal-C nano network structure can be manufactured by adapting the method of the invention to any materials, including pure metals, such as Cu, Fe, Ti, and Mg, and alloys that have at least one selected from among the pure metals, and the like, as long as they allow efficient penetration and dispersion of a carbon material, such as fullerene.

### 8. Interstitial Element

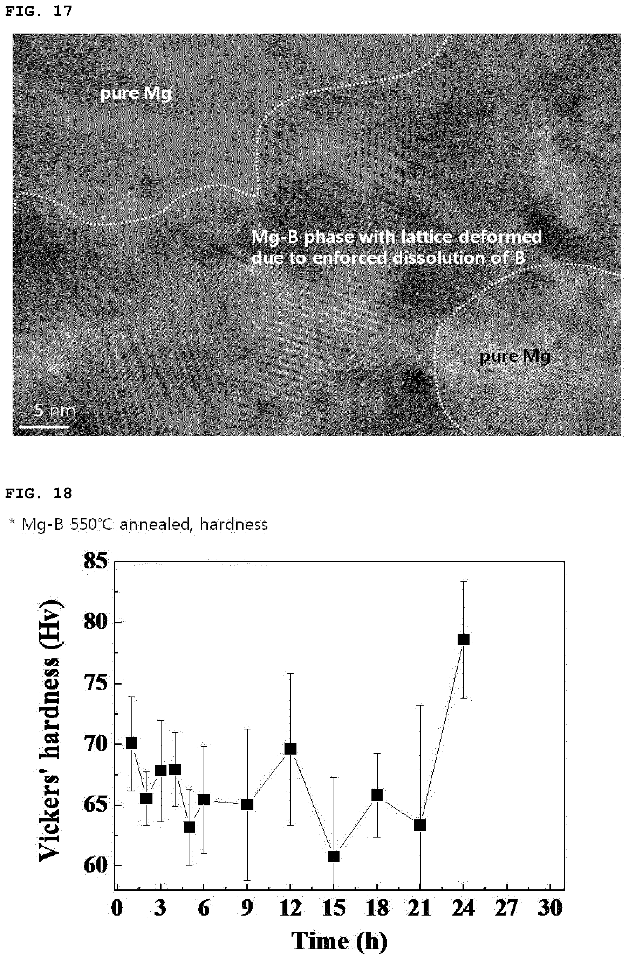

Although C has been described as an example of an element that forces into a metal lattice and then deforms the metal lattice in the foregoing embodiment, it should be understood that C is one of elements that can form an intermetallic compound, and other elements, such as boron (B) or nitrogen (N) atoms, can also achieve a similar effect but not according to the invention. FIG. 16 is a picture of the microstructure of a composite taken using a TEM, the composite including boron carbide (B₄C) dispersed in a Mg matrix. It can be appreciated that B clusters having a size ranging from 2nm to 3nm are dispersed due to the mechanical milling. This composite was heat-treated at 550°C, and a picture of the microstructure of the heat-treated composite taken using a TEM is shown in FIG. 17. As shown in FIG. 17, it can be appreciated that B atoms penetrated into the Mg lattice and deformed the Mg lattice, thereby forming Mg-B nano phases. FIG. 18 shows variation in hardness due to heat treatment of the Mg-B, which is formed as above. It can be appreciated that the hardness increases depending on the heat treatment time in the same manner as in the foregoing embodiment. It can be seen that the hardness is increased rather than decreased even though the composite was heat-treated at a relatively high temperature of 550°C (about 0.9Tm, Tm: melting temperature of Mg). This also shows that the mechanical properties are improved due to the creation of the Mg-B nano phases. Like the foregoing embodiments, this is considered as originating from the influence of, for example, dislocations that are fixed around the nano phases. In addition, nano phase particles are also formed according to the same mechanism as the foregoing embodiments, thereby forming nano strips or a nano network structure. In the meantime, C in boron carbide also forms nano phases, such as Mg-C, like B. However, since the ratio of C to B is 1:4, the effects of Mg-C appear relatively insignificant when compared to Mg-B. However, like the Mg-B nano phases, Mg-C also appears contributing to the improvement of the mechanical properties to a certain degree. As such, this embodiment shows that an element, such as B or N, of a compound (e.g. boron carbide (B₄C) or boron nitride (BN)) that can penetrate into the metal lattice via enforced dissolution and deform the metal lattice can also be used in manufacturing a metal matrix composite, which has nano phases, nano strips or a nano network structure.

## Claims

1. A method of manufacturing an aluminum matrix composite, the method comprising the steps of:
pulverizing fullerene, which is arranged in a face-centered cubic (fcc) structure in an early stage and is present in a form of powder having a micrometer size, via mechanical milling;
plastically deforming aluminum matrix powder via mechanical milling while dispersing the pulverized fullerene into the aluminum matrix powder so as to be dispersed in a nanometer size;
integrating composite powder composed of the aluminum matrix powder and the fullerene via hot molding; and
forming a composite having therein an aluminum-carbon nano phase, an aluminum-carbon nano strip produced by growing-up of the aluminum-carbon nano phase, or an aluminum-carbon nano network structure produced by self-assembly of the nano strip by heat-treating the integrated composite powder;
wherein in the aluminum matrix composite, dislocations are fixed around the aluminum-carbon nano phase particles, or grains of the aluminum matrix are micronized or growing-up thereof is inhibited due to the aluminum-carbon nano strips or the aluminum-carbon nano network structure;
wherein the aluminum matrix composite contains a Al₄Cₓ nano phase, with 0<x<3, not a carbon compound Al₄C₃ caused by the carbons, and the aluminium matrix composite has a mechanical strength exceeding 500 MPa;
wherein the heat treatment is performed in a temperature range that is sufficient for individual carbon atoms released as a carbon-carbon bonding of the carbon material is broken to penetrate into a lattice of the aluminum matrix through short-distance diffusion so that the lattice of the aluminum matrix is deformed or expanded to form Al₄Cₓ nano phase, but not to form the carbon compound Al₄C₃; and
wherein the heat treatment is preferably performed at a temperature ranging from 0.5 Tₘ to 1 Tₘ, in which Tₘ represents the melting temperature of the aluminum matrix.

## Patentansprüche

1. Verfahren zur Herstellung eines Aluminiummatrix-Verbundwerkstoffs, wobei das Verfahren die folgenden Schritte umfasst:
Pulverisieren von Fulleren, das in einem frühen Stadium in einer flächenzentrierten kubischen (fcc) Struktur angeordnet ist und in Form von Pulver mit einer Mikrometergröße vorliegt, durch mechanisches Mahlen;
plastisches Verformen von Aluminiummatrixpulver durch mechanisches Mahlen, während das pulverisierte Fulleren derart in das Aluminiummatrixpulver dispergiert wird, dass es in einer Nanometergröße dispergiert ist;
Integrieren von Verbundpulver, das aus dem Aluminiummatrixpulver und dem Fulleren besteht, durch Heißformen; und
Bilden eines Verbundwerkstoffs mit einer Aluminium-Kohlenstoff-Nanophase, einem Aluminium-Kohlenstoff-Nanostreifen, der durch Aufwachsen der Aluminium-Kohlenstoff-Nanophase hergestellt wird, oder einer Aluminium-Kohlenstoff-Nanonetzwerkstruktur, die durch Selbstorganisation des Nanostreifens durch Wärmebehandlung des integrierten Verbundpulvers hergestellt wird;
wobei in dem Aluminiummatrix-Verbundwerkstoff Versetzungen um die Aluminium-Kohlenstoff-Nanophasenpartikel herum fixiert sind, oder Strukturen der Aluminiummatrix mikronisiert sind oder deren Aufwachsen durch die Aluminium-Kohlenstoff-Nanostreifen oder die Aluminium-Kohlenstoff-Nanonetzwerkstruktur gehemmt wird;
wobei der Aluminiummatrix-Verbundwerkstoff eine Al₄Cₓ-Nanophase mit 0<x<3, nicht eine durch die Kohlenstoffe verursachte Kohlenstoffverbindung Al₄C₃ enthält und der Aluminiummatrix-Verbundwerkstoff eine mechanische Festigkeit von mehr als 500 MPa aufweist;
wobei die Wärmebehandlung in einem Temperaturbereich durchgeführt wird, der für einzelne Kohlenstoffatome, die freigesetzt werden, wenn eine Kohlenstoff-Kohlenstoff-Bindung des Kohlenstoffmaterials aufgebrochen wird, ausreichend ist, um durch Kurzstreckendiffusion in ein Gitter der Aluminiummatrix einzudringen, so dass das Gitter der Aluminiummatrix verformt oder expandiert wird, um die Al₄Cₓ-Nanophase zu bilden, aber nicht, um die Kohlenstoffverbindung Al₄C₃ zu bilden; und
wobei die Wärmebehandlung vorzugsweise bei einer Temperatur im Bereich von 0.5 Tₘ bis 1 Tₘ durchgeführt wird, wobei Tm die Schmelztemperatur der Aluminiummatrix darstellt.

## Revendications

1. Procédé de fabrication d'un composite à matrice métallique, le procédé comprenant les étapes de :
pulvérisation de fullerène, qui est agencé dans une structure cubique à faces centrées (cfc) à un stade précoce et est présent sous une forme de poudre ayant une dimension micrométrique, par broyage mécanique ;
déformation plastique d'une poudre à matrice d'aluminium par broyage mécanique tout en dispersant le fullerène pulvérisé dans la poudre à matrice d'aluminium de façon à ce qu'il soit dispersé à une dimension nanométrique ;
intégration de la poudre composite composée de la poudre à matrice d'aluminium et du fullerène par moulage à chaud ; et
formation d'un composite ayant dans celui-ci une nanophase aluminium-carbone, une nanobande aluminium-carbone produite par croissance de la nanophase aluminium-carbone, ou une structure de nano-réseau aluminium-carbone produite par auto-assemblage de la nanobande par traitement thermique de la poudre composite intégrée ;
dans lequel dans le composite à matrice métallique, les dislocations sont fixées autour des particules de nanophase aluminium-carbone, ou les grains de la matrice d'aluminium sont micronisés ou la croissance de ceux-ci est inhibée en raison des nanobandes aluminium-carbone ou de la structure de nano-réseau aluminium-carbone ;
dans lequel le composite à matrice métallique contient une nanophase Al₄Cₓ, avec 0 < x < 3, pas un composé carboné Al₄C₃ causé par les carbones, et le composite à matrice d'aluminium a une résistance mécanique dépassant 500 MPa ;
dans lequel le traitement thermique est réalisé dans une plage de température qui est suffisante pour que les atomes de carbone individuels libérés lorsqu'une liaison carbone-carbone du matériau carboné est rompue pénètrent dans un réseau de la matrice d'aluminium par diffusion sur une courte distance de sorte que le réseau de la matrice d'aluminium est déformé ou dilaté pour former une nanophase Al₄Cₓ, mais pas pour former le composé carboné Al₄C₃ ; et
dans lequel le traitement thermique est de préférence réalisé à une température se situant dans la plage de 0,5 Tₘ à 1 Tₘ, dans laquelle Tₘ représente la température de fusion de la matrice d'aluminium.
